# EUROPEAN PATENT APPLICATION

(11) **EP 2 165 988 A1**
(43) Date of publication of application: **24.03.2010**
(21) Application number: 07788656.2
(22) Date of filing: 09.07.2007
(51) Int. Cl.: C04B 7/32, C04B 7/34, C04B 7/22

(54) **PARTICLES WITH CEMENT PROPERTIES, PRODUCTION METHOD AND CEMENT**

(71) Applicant: CEMENTOS PORTLAND VADERRIVAS, S.A, 31002 Pamplona Navarra (ES)
(72) Inventor: LIZARRAGA GALARZA, Serafin, E-20018 Donostia (ES)
(74) Representative: Gonzalez-Alberto Rodriguez, Natalia
(86) International application number: PCT/ES2007/000409
(87) International publication number: WO 2009/007470

(57) **Abstract**

The present invention relates to particles with hydraulic or hardening properties obtained by mixing clays, lime-stones, marls or industrial products or by-products to obtain a chemical composition which melts after being ground and fed into a gaseous fluid at a high temperature, adopting a solid spherical shape or microsphere shape, and which after being stabilized in a solid state by means of rapid cooling, obtains high vitrification suitable for chemical reactivity, having a minimal surface in relation to its mass.

The invention also relates to a process for the manufacture of said particles or microspheres and to cement made up of said microspheres.

The present invention can be applied to the manufacture of cement with microspheres as a component of the cement.

## Description

### Field of the Art

The present invention relates to particles with hydraulic or hardening properties obtained by mixing clays, lime-stones, marls or industrial products or by-products to obtain a chemical composition which melts after being ground and fed into a gaseous fluid at a high temperature, adopting a solid spherical shape or microsphere shape, and which after being stabilized in a solid state by means of rapid cooling, obtains high vitrification suitable for chemical reactivity, having a minimal surface in relation to its mass.

The invention also relates to a process for the manufacture of said particles or microspheres and to a cement made up of said microspheres.

The present invention can be applied to the manufacture of cement with microspheres as a cement component.

### Prior State of the Art

No products are known in the state of the art having the features of the product formed by the microspheres or particles object of the present invention. Residues resembling the product object of this patent, such as fly ash, are obtained in only a few industrial processes intended for other purposes.

The EN 197-1 standard describing and defining the cements to be manufactured in Europe defines fly ash as one of the components of cement. The ASTM standard and all other cement standards worldwide also do the same.

These definitions restrict that the origin of this material may only be from carbon combustion in thermal power plants. According to the mentioned European standard, fly ash is obtained by electrostatic or mechanical precipitation of powdery particles entrained by the gaseous flows of furnaces fed with pulverized coal. The ash obtained by other methods must not be used in cements. Said fly ash can have a siliceous nature with pozzolanic, or calcareous, properties, as well as with hydraulic properties.

Although the definition provided in said European standard makes it possible to evaluate a residue, it does not allow other processes to obtain this product, even if it is optimized, for the same purpose, in other words controlling its composition and chemical reactivity, degree of vitrification, physical properties, granulometry and spherical shape, which are all very important in the final properties, and preventing hazardous compounds, such as the unburned products that accompany the actual fly ash.

The actual fly ash obtained as a by-product has no assurance as regards the chemical composition as well as the rest of its properties.

### Summary of the Invention

This patent application for particles with hardening properties and a process for the manufacture thereof relates to the manufacture of microspheres or particles with hydraulic or hardening properties the technical background of which can be found in fly ash, but the raw materials of which are completely different from fly ash. In fact they are not ash, but the objective is for them to replace ash as a cement component but with optimized and controlled properties.

These products also allow certain countries or areas that do not have the raw materials to manufacture cement clinker to obtain cementitious components that can be used in very significant percentages for the manufacture of cement (including 90%).

The microspheres object of the present invention prevent the grinding, in some cases completely and in other cases partially, of the cement components since by means of the process for the manufacture of said microspheres, the obtained product virtually has the fineness required in the end product.

The foregoing involves a very considerable energy, primarily electric, savings, so its advantages for support on the society's sustainable development objectives are quite considerable, mainly because it contributes to improving the quality of cements, allowing the manufacture of new cements, doing so with lower costs and with a lower amount of greenhouse effect gas emissions.

The microspheres with hydraulic or hardening properties object of the invention are a product resulting from the mixture of clays, lime-stones, marls or of industrial products or by-products to obtain a suitable chemical composition which melts once it is finely ground and fed into a gaseous flow at a high temperature, adopting a spherical shape and this shape being stabilized in solid state by means of rapid cooling, which further allows obtaining a high vitrification state, which is optimal for chemical reactivity.

Due to their microsphere shapes and to their high degree of vitrification, their physical behavior is that of real rolling, or micro-rolling elements, when they participate as cement components, reducing the amount of water necessary for the derivatives thereof such as mortars and concretes. This has an important property improvement and durability benefit.

Their chemical composition and high degree of vitrification confer them reactivity with hydraulic properties (which properties in the cement world mean that when a material is mixed with water and then hardens, it has mechanical properties) that are either intrinsic or due to their reaction with the cement clinker hydration products or bother, obtaining very high mechanical properties, low porosities and improvements in chemical resistance at lower costs.

It is therefore an object of the present invention to provide a product which replaces the fly ash used in the manufacture of cements, allowing the manufacture of cements with better mechanical properties with regard to current cements.

The process for producing the mentioned microspheres consists of a metering facility to meter the raw materials into a mill, the mill being able to be a ball mill, vertical mill, or another type of mill, such that it enables attaining the fineness required for the mixture of clays, lime-stones, marls and/or industrial products or by-products. This fineness will be such that the end product has a mean diameter of less than 100 microns, i.e. at least 50% of the particles will have a diameter of less than 100 microns.

After grinding the raw material, the particles are preheated but despite the fact that this step is not essential in all cases, it considerably improves the energy efficiency of the process. The purpose of this pre-heating is to facilitate the following step of melting the particles in suspension in a fluid at a high temperature, since the closer the temperature of the raw material to the melting point when coming out of this step, the easier it makes the next step. Said pre-heating can be done in a cyclone tower or with other technologies, such as a fluidized bed for example.

The next step consists of feeding the preferably preheated raw material into a heated fluid at high temperatures, thus obtaining the melting of the raw material and the adoption of the spherical shape in liquid state. High particle dispersion must be obtained in this step in order to prevent phagocytosis, i.e. said particles join together, forming larger particles, as well as to reduce the time of this step to thus reduce the probability that the phenomenon of phagocytosis will take place.

The melting point is a temperature determined by the chemical composition of the microspheres and ranges between 1250°C and 1600°C.

The last step of the production process consists of cooling and solidification of the particles, which can be natural as the gas gradually drops in temperature throughout the furnace, or forced by means of mixing it with a cooler fluid.

This step ends with the collection of the product that has decanted in the furnace and the collection in the filter.

The previous melting and solidification steps can be done in different types of furnaces, for example in a horizontal furnace, similar to a cement furnace with the main burner being located at the other end of the furnace, a vertical furnace or another type of furnace performing the mentioned functions of the process.

As is known, clinker and the remaining cement components are ground to very fine sizes, in the order of 25 to 8 microns, expressed as mean particle diameter. The microspheres object of this patent do not require this grinding, which entails considerable energy advantages.

By means of the previously described process, different microspheres can be obtained with hardening or hydraulic properties depending on their chemical composition, such as:
- Microspheres with a siliceous nature, which are microspheres with hydraulic properties with a chemical composition characterized by having SiO₂ percentages exceeding 40%, the remaining components being Al₂O₃, Fe₂O₃, CaO and MgO, Na₂O, K₂O, and small amounts of other elements.
- Microspheres with an aluminous nature, which are microspheres with hydraulic properties with a chemical composition characterized by having Al₂O₃ percentages exceeding 20%, the remaining components being SiO₂, Fe₂O₃, CaO and MgO, Na₂O, K₂O, and small amounts of other elements.
- Microspheres with a siliceous-aluminous nature, which are microspheres with hydraulic (hardening) properties with a chemical composition characterized by meeting the requirements of the two previous microspheres.
- Microspheres with a slag nature, which are those microspheres the chemical composition of which meets the chemical requirements for blast furnace slag defined in UNE-EN 197, and which result from the process of manufacture in microspheres with hydraulic properties described in the present invention.
- Microspheres with a clinker nature, which are those microspheres with a chemical composition which complies with the CaO percentage exceeding 50%, the remaining components being SiO₂, Fe₂O₃, CaO and MgO, Na₂O, K₂O, and small amounts of other elements.

### Description of a Preferred Embodiment

Two embodiments of the object of this patent are described below, one with grey microspheres with hardening properties and one with white microspheres, in which the water demand reduction when replacing part of the cement with the microspheres and the improvement of the mechanical properties can be observed.

### Embodiment 1: Grey Microspheres

Chemical analysis of the grey microspheres with hardening properties is performed according to the UNE EN 196-2 standard (Methods of testing cement: Part 2: Chemical analysis of cements), obtaining the following results;

| **%** | **M.P.** | **SiO₂** | **SiO₂ reac.** | **Al₂O₃ +TiO₂,** | **Fe₂O₃** | **CaO** | **MgO** | **K₂O** | **Na₂O** |
|---|---|---|---|---|---|---|---|---|---|
| **Microspheres with gardening properties** | 3.65 | 59.61 | 44.00 | 20.91 | 4.51 | 7.39 | 0.96 | 2.67 | 0.38 |

Expansion will then be determined according to UNE-EN 197-1 standard for cements (Common cements: composition, specifications and conformity criteria), and to that end a sample is prepared mixing 50% grey microspheres with hardening properties and 50% CEM I 52.5 R, obtaining the following results:

| | **Start** | **Cold** | **Hot** |
|---|---|---|---|
| **50% CEM I 52.5 R + 50% Microspheres with hardening properties** | 0 mm | 0 mm | 0 mm |

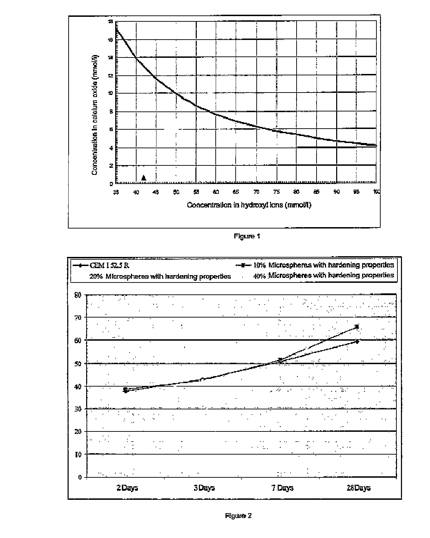

Once the expansion has been verified, the pozzolanicity of the resulting product was determined according to UNE-EN 196-5 standard in relation to Methods of testing cement (Part 5; Pozzolanicity test for pozzolanic cements) for a cement with 55% clinker, plus 45% microspheres with hardening properties and 3.5% gypsum (Figure 1). As can be seen in said graph, pozzolanic activity, i.e. the reaction of the microspheres with the calcium hydroxide released in clinker hydration, significant reduces the concentration of the calcium ions in the test solution. This is due to its high chemical reactivity.

**Granulometric measurement by means of laser granulometry: Grey microspheres with hardening properties**

| **microns** | **% passes** |
|---|---|
| 1 | 16.3 |
| 1.5 | 24.4 |
| 2 | 44.3 |
| 3 | 58.0 |
| 4 | 63.0 |
| 6 | 67.4 |
| 8 | 71.6 |
| 12 | 75.0 |
| 16 | 77.2 |
| 24 | 78.6 |
| 32 | 80.5 |
| 48 | 82.7 |
| 64 | 87.4 |
| 96 | 92.0 |
| 128 | 98.0 |
| 192 | 100.0 |

Different mixtures were prepared using reference cement CEM I 52.5 R, with different percentages of microspheres with hardening properties, and tests were conducted to determine the mechanical strength according to the UNE EN-196-1 standard for different percentages.

| **%** | **STANDARD CEM I 52.5 R** | **10% micro spheres with hardening properties** | **20% microspheres, with hardening properties** | **40% microspheres with hardening properties** |
|---|---|---|---|---|
| Mixing water | 28.8 | 27.9 | 26.8 | 25.2 |

| **Strength (N/mm²)** | **STANDARD CEM I 52.5 R** | | **10% microspheres with hardening properties** | | **20% microspheres with hardening properties** | | **40% microspheres with gardening properties** | |
|---|---|---|---|---|---|---|---|---|
| | **Flex** | **Comp.** | **Flex** | **Comp.** | **Flex** | **Comp.** | **Flex** | **Comp.** |
| **2 days** | 6.7 | 37.7 | 6.6 | 38.8 | 6.4 | 35.2 | 4.8 | 23.6 |
| **3 days** | 8.3 | 42.8 | - | 42.5 | - | 42.5 | - | 29.7 |
| **7 days** | 8.5 | 50.8 | 9.2 | 51.6 | 8.4 | 48.7 | 6.7 | 38.8 |
| **28 days** | 8.9 | 59.2 | 9.8 | 65.6 | 10.7 | 70.8 | 9.8 | 64.2 |

As can be seen from the previous table, the grey microspheres with hardening properties object of the present invention improve both the flexural and compressive mechanical strength of a cement containing the microspheres.

Figure 2 shows a graph in which the evolution of the compressive mechanical strength of the previous table is observed.

Figure 3 shows the spherical shapes of these obtained grey cem-spheres by microscopic photography.

### Embodiment 2: White Microspheres

Chemical analysis of the white microspheres with hardening properties is performed according to the UNE EN 196-2 standard (Methods of testing cement: Part 2: Chemical analysis of cements), obtaining the following results:

| % | **M.P.** | **SiO₂** | **SiO₂ reac.** | **Al₂O₃ +TiO₂** | **CaO** | **Fe₂O₃** | **MgO** | **K₂O** | **Na₂O** |
|---|---|---|---|---|---|---|---|---|---|
| **White microspheres with hardening properties** | 3.81 | 62.39 | 46.02 | 21.89 | 7.71 | 0.08 | 1.01 | 2.76 | 0.40 |

Expansion will then be determined according to UNE-EN 197-1 standard for cements (Common cements: composition, specifications and conformity criteria), and to that end a sample is prepared mixing 50% white microspheres with hardening properties and 50% BL I 52.5 R, obtaining the following results:

| | **Start** | **Cold** | **Hot** |
|---|---|---|---|
| **50% BL I 52.5 R+ + 50% White micro spheres with hardening properties** | 0 mm | 0 mm | 0 mm |

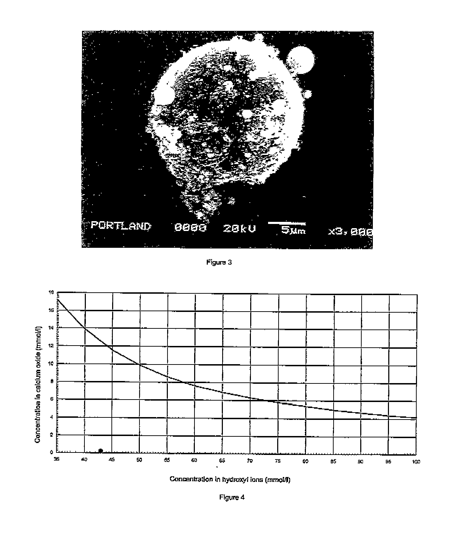

Once the expansion has been verified, the pozzolanicity of the resulting product was determined according to UNE-EN 196-5 standard in relation to Methods of testing cement (Part 5: Pozzolanicity test for pozzolanic cements) for a cement with 55% clinker, plus 45% white microspheres with hardening properties and 3.5% gypsum (Figure 4).

**Granulometric measurement by means of laser granulometry: White microspheres with hardening properties**

| **microns** | **% passes** |
|---|---|
| 1 | 17.0 |
| 1.5 | 25.1 |
| 2 | 44.2 |
| 3 | 60.0 |
| 4 | 65.1 |
| 6 | 72.1 |
| 8 | 75.5 |
| 12 | 78.9 |
| 16 | 81.0 |
| 24 | 83.5 |
| 32 | 86.5 |
| 48 | 91.2 |
| 64 | 97.9 |
| 96 | 100.0 |
| 128 | 100.0 |
| 192 | 100.0 |

Different mixtures were prepared using reference cement BL I 52.5 R, with different percentages of white microspheres with hardening properties, and tests were conducted to determine the mechanical strength according to the UNE EN-196-1 standard for different percentages.

| **%** | **STANDARD BL I 52.5 R** | **10% white microspheres with hardening properties** | **20% white microspheres with hardening properties** | **40% white microspheres with hardening properties** |
|---|---|---|---|---|
| Mixing water | 29.0 | 27.9 | 27.1 | 25.0 |

| **Strength (N/mm²)** | **STANDARD BL I 52.5 R** | | **10% white microspheres with hardening** properties | | **20% white microspheres with hardening properties** | | **40% white microspheres with hardening properties** | |
|---|---|---|---|---|---|---|---|---|
| | **Flex** | **Comp.** | **Flex** | **Comp.** | **Flex** | **Comp.** | **Flex** | **Comp.** |
| **2 days** | 6.0 | 38.4 | 6.0 | 39.5 | 5.8 | 36.0 | 4.5 | 24.7 |
| **3 days** | 9.0 | 55.8 | 9.7 | 57.0 | 9.6 | 54.2 | 7.4 | 43.1 |
| **28 days** | 9.0 | 67.5 | 10.3 | 75.1 | 10.5 | 80.7 | 10.2 | 73.3 |

As can be seen from the previous table, the white microspheres with hardening properties object of the present invention improve both the flexural and compressive mechanical strength of a cement containing the microspheres.

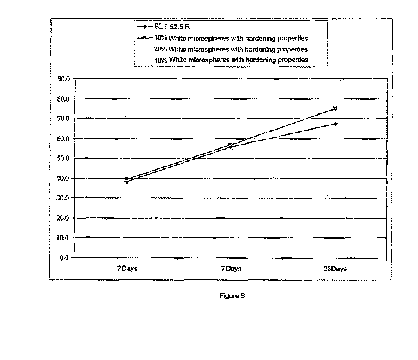

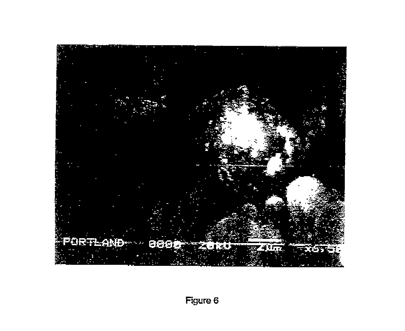

Figure 5 shows a graph in which the evolution of the compressive mechanical strength of the previous table is observed. Likewise, Figure 6 shows a microscopic photography of the obtained white microspheres.

## Claims

1. - Particles with hydraulic properties for their use as a cement component **characterized in that** they are formed by a mixture of clays, lime-stones, marls and/or industrial products or by-products and **in that** they have a solid spherical shape with a minimal surface in relation to its mass, or solid microspheres, and high vitrification.

2. - Particles according to claim 1, **characterized in that** they are microspheres the chemical composition of which is formed by at least 40% SiO₂, the remaining components being Al₂O₃, Fe₂O₃, CaO and MgO, Na₂O, K₂O, as well as small amounts of other elements.

3. - Particles according to claim 1, **characterized in that** they are microspheres the chemical composition of which is formed by at least 20% Al₂O₃, the remaining components being SiO₂, Fe₂O₃, CaO and MgO, Na₂O, K₂O, as well as small amounts of other elements.

4. - Particles according to claim 1, **characterized in that** they are microspheres the chemical composition of which is formed by at least 40% 3iO₂ and at least 20% Al₂O₃, the remaining components being Fe₂O₃, CaO and MgO, Na₂O, K₂O, as well as small amounts of other elements.

5. - Particles according to claim 1, **characterized in that** they are microspheres the chemical composition of which meets the chemical requirements for blast furnace slag defined in UNE-EN 197.

6. - Particles according to claim 1, **characterized in that** they are microspheres the chemical composition of which is formed by at least 50% CaO, the remaining components being SiO₂, Al2O₃, Fe₂O₃, and MgO, Na₂O, K₂O, as well as small amounts of other elements.

7. A process for the manufacture of microspheres with hydraulic or hardening properties, **characterized on that** it comprises the following steps:
- mixing and grinding the raw materials,
- introducing said raw materials in a furnace,
- completely melting the raw materials at temperatures between 1250 and 1600°c so that the raw material adopts the form of particles with a spherical shape, and
- cooling and solidifying the particles.

8. - A process according to claim 7, **characterized in that** the cooling is natural as the gas gradually drops in temperature throughout the furnace.

9. - A process according to claim 7, **characterized in that** the cooling is forced by means of mixing it with a cooler fluid.

10. - A process according to claim 7, **characterized in that** the raw material is ground until the mean diameter of the mixture is 100 microns.

11. - A process according to claim 7, **characterized in that** after mixing and grinding the raw material, it is preheated until a temperature close to the melting point.

12. - A cement, **characterized in that** it includes as a component particles according to claims 1 to 6.
